Europäisches Patentamt

(19) European Patent Office

Office européen des brevets

(11) Publication number: **0 005 049**
A1

## (12) EUROPEAN PATENT APPLICATION

(21) Application number: **79300635.4**

(22) Date of filing: **18.04.79**

(51) Int. Cl.²: **F 16 G 11/00**
**B 63 B 21/04**

(30) Priority: **18.04.78 GB 1525678**

(43) Date of publication of application:
**31.10.79 Bulletin 79/22**

(84) Designated Contracting States:
**BE DE FR GB IT NL**

(71) Applicant: **MASTEP (PLASTICS) LIMITED**
**Waltham House Town Cross Avenue**
**Bognor Regis Sussex PO21 2DT(GB)**

(72) Inventor: **Lee, William Waltham Alfred**
**15 The Cresent Felpham**
**Bognor Regis Sussex PO22 7HB(GB)**

(74) Representative: **Daley, Michael John et al,**
**F.J. CLEVELAND & COMPANY 40/43 Chancery Lane**
**London, WC2 1JQ(GB)**

(54) A device for connecting a rope to a support.

(57) A device for connecting a rope to a support comprising a hook (10) of U-shape configuration having a pair of parallel limbs (11, 12) one (11) of which is longer than the other (12). The long limb (11) has an upper aperture (13), which has a V-shaped lower portion, and a lower circular aperture (14). The short limb (12) has a circular aperture (15), at least a portion of which is located below the upper aperture (13) in the long limb (11).

When an end of a rope (16) is threaded through the aperture (15) in the short limb (12), through the upper aperture (13) of the long limb (11) and through the lower aperture (14) in the long limb (11) and a tensioning force is applied to the rope (16), the rope (16) becomes wedged in the V-shaped portion of the upper aperture (13) of the long limb (11) and the hook (10) is moused.

The hook (10) is suitable for suspending a fender (17) from a guard rail (19) of a maritime vessel or for generally securing a load to a support by means of a rope.

FIG.4

- 1 -

## A device for connecting a rope to a support

This invention relates to a device for connecting a rope to a support.

It is common practice to use rope for connecting an article to a support, the rope being in tension whilst in use. One such use is the suspension of a fender from a guard rail of a maritime vessel so that the fender is located adjacent a portion of an outer side wall of the vessel to prevent the portion from contacting another object. While the fender is suspended from the guard rail, the portion of the rope between the guard rail and the fender is in tension. Another such use is with a covering for a load of

- 2 -

0005049

a truck. The covering is connected to a rail of the truck and tension is applied to the rope to ensure that the covering is firmly secured to the truck before the rope is finally secured to the rail.

It is generally necessary to adjust the rope after initially securing it to the rail. Adjustment of a rope can be a difficult and time-consuming operation, especially when the rope is wet, because it is necessary to pull a portion of the rope with one hand while untying with the other hand a knot securing another portion of the rope to the rail.

The invention as claimed is intended to provide a remedy. It solves the problem of having to pull a portion of a rope while untying a knot securing another portion of the rope by ensuring that the rope is wedged whereby tension in the rope is maintained while the knot is tied or untied with both hands.

The advantages offered by the invention are that the hook provides means for connecting a rope to a support and for enabling adjustment of the rope easily to be carried out and the hook is moused by the rope thus reducing any risk of the hook becoming dislodged from a support rail.

In this specification, the term 'rope' includes hemp, manilla and synthetic fibrous material having resilient characteristics.

Following is a description, by way of example only with reference to the accompanying drawing, of one method of carrying the invention into effect.

In the drawing:-

FIGURE 1 is a perspective view of a hook in accordance with the present invention and a rope of a fender attached thereto, the hook being shown in a stowed position,

FIGURE 2 is a perspective view of the hook mounted on a support, showing assembly of the rope of the fender thereto,

FIGURE 3 is a perspective view of the hook mounted on the support showing the fender in a selected position, and

FIGURE 4 is a perspective view of the hook showing the rope of the fender in a secured position.

Referring now to the drawing, there is shown a hook 10 of substantially inverted U-shape configuration, the hook being of plastics material and having a pair of parallel limbs 11, 12, the limb 11 extending in a longitudinal direction thereof beyond the limb 12. The long limb 11 is provided with an upper aperture 13 which tapers in a downward direction to a V-shaped portion. The long limb 11 is provided with a lower aperture 14 which is circular and is located adjacent an end portion of the limb 11 below the aperture 13. The short limb 12 is provided with an aperture 15 which is circular and which is located adjacent an end portion of the short limb 12, at least a portion of the aperture 15 being located in a longitudinal direction of the short limb 12 below the lowermost part of the aperture 13.

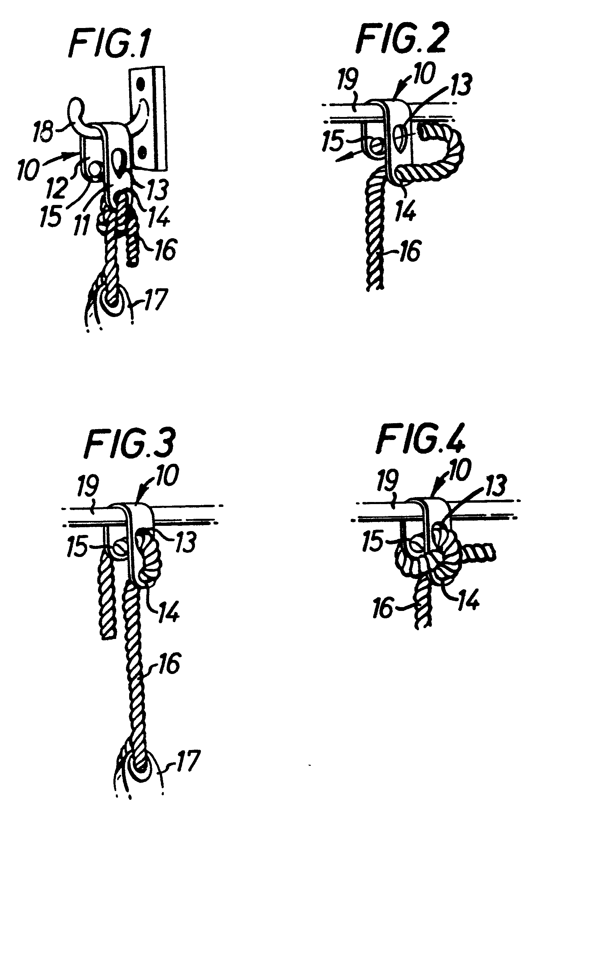

The aperture 14 has threaded therethrough one end portion of a rope 16, the other end portion of which is secured to a fender 17 for use with a maritime vessel such as a ship or boat. The end portion of the rope 16 remote from the fender is secured to the hook 10 by tying a knot, such as a clove hitch, at the end portion of the rope adjacent the hook 10, as shown in Figure 1.

The hook 10 having the fender 17 suspended therefrom may be stowed by locating the hook on a bracket 18 of the vessel. In this manner, the hook 10 may easily be removed from the bracket 18 and located on a support 19 such as a guard rail of the vessel.

In use, the hook 10 is located on the support 19 and the end portion of the rope 16 remote from the fender 17 is untied from the hook 10 and the end portion of the rope 16 is threaded through the upper aperture 13 of the long limb 11 and the aperture 15 of the short limb 12, as shown in Figure 2. The rope 16 is then drawn through the apertures 13, 14 and 15 until the length of the rope depending from the hook 10 and between the hook 10 and the fender 17 is a desired length, as shown in Figure 3.

The tension in the rope 16 due to the weight of the fender 17 causes the rope 16 to be drawn outwardly of the aperture 13, downwardly of the long limb 11 and inwardly of the aperture 14. However, since the rope passes upwardly from the limb 12 to the aperture 13, the outward downward movement of the rope from the aperture 13 causes the rope to be drawn downwardly in the V-shaped portion of the aperture 13 thereby to wedge and secure the rope 16 therein.

The rope 16 is made secure relative to the hook 10 by inserting the free end portion of the rope 16 between the outer face of the long limb 11 and the portion of the rope 16 extending between the aperture 13 and the aperture 14, as shown in Figure 4.

It will be appreciated that with the hook 10 having a fender 17 secured thereto by means of the rope 16, the fender may easily be stowed by locating the hook 10 on the bracket 18 and the hook 10 may easily be removed therefrom.

Similarly, the hook 10 may easily be located on the support 19 and during adjustment of the length of rope 16 between the hook 10 and the fender 17 there is reduced risk that releasing of the rope 16 between the hook 10 and the fender 17 will result in the fender falling from the vessel. Furthermore, in the supported condition of the fender 17 as shown in Figure 4, the hook 10 may be moved longitudinally of the support 19 without readjusting the rope 16.

It will further be appreciated that, in the supported position of the fender 17, as shown in Figure 4, the hook 10 cannot become detached from the support 19 because a portion of the rope 16 bridges the limbs 11, 12 below the support 19 thereby mousing the hook 10.

It will also be appreciated that the hook 10 may be used for purposes other than for suspending a fender from a support of a ship or boat. For example, the hook may be used for connecting a rope to a support for securing a load relative to the support.

0005049

CLAIMS:

1.    A device for connecting a rope to a support
comprising:-

        a hook member adapted to engage the support,
the hook member having an aperture adapted to receive
the rope therethrough and the aperture having a
tapering portion, and

        means for applying tension to the rope when
the rope extends through the aperture

        so that tension in the rope causes the rope
to wedge in the tapering portion of the aperture
thereby to secure the rope to the hook member.


2.    A device as claimed in claim 1 wherein the hook
member is of substantially inverted U-shape configuration
having a pair of limbs, the said aperture being located
in a first of the limbs.


3.    A device as claimed in claim 2 wherein the said
means comprises a first additional aperture located in
a second of the limbs so that when the rope extends
through the said aperture and the first additional
aperture, the hook member is moused.


4.    A device as claimed in claim 3 wherein the said
means comprises a second additional aperture in the first of the limbs, both of the additional apertures being spaced below the said aperture in a longitudinal direction of the limbs and the tapering portion of the said aperture tapering towards the second additional aperture so that when the rope extends through the second additional aperture, the said aperture and the first additional aperture, tension in the rope causes the rope to wedge in the tapering portion of the said aperture thereby to secure the rope to the hook member.

5. A device as claimed in claim 4 wherein the first of the limbs has a portion thereof extending in a longitudinal direction beyond the second of the limbs.

6. A device as claimed in claim 5 wherein the second additional aperture may be located in the said portion of the first limb.

1/1                    0005049

# FIG.1

18
10
12
15   11
13
14
16
17

# FIG.2

19   10   13
15
14
16

# FIG.3

19   10
15   13
14
16
17

# FIG.4

19   10   13
15
16   14

**European Patent Office**

**EUROPEAN SEARCH REPORT**

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | US - A - 3 575 371 (CARLSTEDT)<br><br>* column 1, line 61- column 2, line 18; figures 1-3 *<br><br>--- | 1 | F 16 G 11/00<br>B 63 B 21/04 |
| | US - A - 1 890 829 (RUNDELL)<br><br>* page 3, lines 75-130; figures 16-18 *<br><br>--- | 1-6 | |
| | US - A - 1 509 693 (SCHOCH)<br><br>* page 1, lines 93-103; figures 1,4 *<br><br>--- | 1 | **TECHNICAL FIELDS SEARCHED (Int.Cl.³)**<br><br>F 16 G<br>B 63 B<br>B 60 P<br>F 21 S<br>F 21 V<br>A 47 G<br>A 47 J<br>D 06 F |
| | FR - A - 669 694 (EDWARDS)<br><br>* page 2, lines 20-45; figures 1, 2 *<br><br>--- | 1,5 | |
| | CH - A - 339 860 (SCHNEIDER)<br><br>* figure 1 *<br><br>--- | 1,2,3 | |
| | FR - A - 2 094 523 (ADENOT)<br><br>* claims 1-3; figures 1-4 *<br><br>--- | 1<br><br>1 | **CATEGORY OF CITED DOCUMENTS**<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| A | FR - E - 33 394 (CHERBLANC)<br><br>* page 1, line 48 - page 2, line 14; figures 1-5 * | 1 | &: member of the same patent family, corresponding document |

The present search report has been drawn up for all claims

| Place of search | Date of completion of the search | Examiner |
|---|---|---|
| The Hague | 26-07-1979 | SIGWALT |

EPO Form 1503.1  06.78